# EUROPÄISCHE PATENTANMELDUNG

(11) **EP 3 958 103 A1**
(43) Veröffentlichungstag der Anmeldung: **23.02.2022**
(21) Anmeldenummer: 20191481.9
(22) Anmeldetag: 18.08.2020
(51) Int. Cl.: G06F 3/048, G06N 3/02, G05B 19/409

(54) **ADAPTIVE MENSCH-MASCHINEN-SCHNITTSTELLE AUF BASIS KÜNSTLICHER INTELLIGENZ**

(71) Anmelder: Siemens Aktiengesellschaft, 80333 München (DE)
(72) Erfinder: Kubo, Florian, 97727 Fuchsstadt (DE); Jöhnßen, Oliver, 90451 Nürnberg (DE); Rempel, Karina, 91056 Erlangen (DE)

(57) **Zusammenfassung**

Die Erfindung betrifft ein Verfahren zum Bedienen einer Maschine (20) zur Verwendung in einer industriellen Produktionsumgebung mit folgenden Schritten:
- Bereitstellen einer Bedieneinrichtung (31) zum Bedienen der Maschine (20) und zum Beobachten von Maschinenzuständen, wobei die Bedieneinrichtung (31) ein Mittel einer künstlichen Intelligenz umfasst oder mit einem Mitteln einer künstlichen Intelligenz verbindbar ist,
- Durchführen einer Vielzahl an Bedienhandlungen in Form jeweils einer Folge von Bedienschritten durch einen Bediener mittels der Bedieneinrichtung (31),
- Erfassen und Lernen der Bedienhandlungen durch das Mittel der künstlichen Intelligenz und
- Durchführen einer weiteren Bedienhandlung in Form einer weiteren Folge von Bedienschritten (B11 - B110; B21 - B27) durch den Bediener.

Dabei ist wenigstens eine von der Bedieneinrichtung (31) für den Bediener während der Durchführung der weiteren Bedienhandlung bereitgestellte Information (34) von wenigstens einem Bedienschritt der weiteren Folge von Bedienschritten und dem Mittel der künstlichen Intelligenz abhängig.

Bedienhandlungen eines Bedieners werden somit gelernt und darauf aufbauend Informationen für nachfolgende Bedienhandlungen bereitgestellt.

## Beschreibung

Die Erfindung betrifft ein Verfahren zum Bedienen einer Maschine zur Verwendung in einer industriellen Produktionsumgebung mit folgenden Schritten:
- Bereitstellen einer Bedieneinrichtung zum Bedienen der Maschine und zum Beobachten von Maschinenzuständen, wobei die Bedieneinrichtung ein Mittel einer künstlichen Intelligenz umfasst oder mit einem Mitteln einer künstlichen Intelligenz verbindbar ist,
- Durchführen einer Vielzahl an Bedienhandlungen in Form jeweils einer Folge von Bedienschritten durch einen Bediener mittels der Bedieneinrichtung.

Ferner betrifft die Erfindung eine Bedieneinrichtung für eine Steuerung einer Maschine, eine numerische Steuerung mit einer Bedieneinrichtung sowie eine Werkzeugmaschine mit einer derartigen numerischen Steuerung.

Produktions- oder Werkzeugmaschinen sind teure Investitionsgüter und haben daher eine sehr lange Lebenszeit. Teilweise werden sie für genau eine spezielle Aufgabe individuell gefertigt. Der Wettbewerbs- und Kostendruck ist hier sehr groß.

Zur Steuerung von Produktions- oder Werkzeugmaschinen sind spezielle Steuerungen am Markt verfügbar, zum Beispiel PLC-Steuerungen (Programmable Logic Controller) für Produktionsmaschinen oder CNC-Steuerungen (Computerized Numerical Control) für Werkzeugmaschinen.

Zur Bedienung der Maschine umfasst die Steuerung der Maschine eine Bedieneinrichtung, insbesondere eine Bedienerschnittstelle. Die Bedienerschnittstelle wird auch Benutzerschnittstelle, "Mensch-Maschine-Schnittstelle" (MMS) oder englisch "Human Machine Interface" (HMI) oder "Man Machine Interface" (MMI) genannt und erlaubt dem Bediener unter Umständen über das Bedienen der Maschine hinaus das Beobachten von Anlagenzuständen und das Eingreifen in Fertigungs-Prozesse. Die Bereitstellung der Informationen ("Feed-back") erfolgt entweder über Bedienpulte mit Signallampen, Anzeigefeldern und Tastern oder per Software über ein Visualisierungssystem, das zum Beispiel auf einem Terminal läuft.

Die Bedieneinrichtung umfasst in der Regel eine grafische Benutzeroberfläche oder auch grafische Benutzer- bzw. Bedienerschnittstelle (englisch "graphical user interface", GUI). Die Bedienerschnittstelle für eine Maschine wird in der Regel einmalig vor der Inbetriebnahme festgelegt und erstellt. Sie ist zumeist funktionsorientiert und berücksichtigt weder die lokalen Gegebenheiten, z.B. bestimmte Prozesse, in die Maschine eingebunden ist oder den Aufstellort, noch die Fähigkeiten der Anwender. Auf eine gute Ergonomie wird oft nicht geachtet.

Aus diesem Grund sind die genannten Maschinen oft sehr umständlich zu bedienen.

In der Regel werden die Mitarbeiter für die spezielle Maschine geschult und müssen dann mit der Bedienerschnittstelle leben. Teilweise wird die Bedienerschnittstelle im Rahmen einer Modernisierung von Fachkräften mit Spezialwerkzeugen (z.B. dem sog. TIA Portal von Siemens) angepasst.

Bisher wurde die Bedienoberfläche für Produktions- und Werkzeugmaschinen komplett von Hand erstellt, das heißt mit geeigneten Software-Tools programmiert.

Dynamische Bildschirmmasken sind von Webanwendungen bereits bekannt. Insbesondere sind folgende Verfahren bekannt:
- Responsive Design: Hier passt sich die Maske an das Genutzte Bediengerät an. Das Verhalten ist im Vorfeld aber fest einprogrammiert.
- Personalisierte Seiten: Hier werden Inhalte angezeigt, für die sich der Anwender interessieren könnte (z.B. personalisierte Werbung).
- Selbstkonfiguration: Hier kann der Anwender Bildschirmmasken individuell selbst gestalten. Dabei kommen häufig sog. Low-Coding-Konzepte zum Einsatz.

Bei den bekannten Verfahren werden die Interaktionsdaten nicht im Betrieb kontinuierlich ausgewertet. Insbesondere wird nicht aus den Interaktionen gelernt, um diese künftig zu vereinfachen, oder es werden nicht automatisch neue Masken erstellt.

Künstliche Intelligenz (KI) und insbesondere künstliche neuronale Netzwerke (KNN) werden heute bereits auf vielen technischen Gebieten angewendet. Beispiele dafür sind Mustererkennung, Spracherkennung oder Gesichtserkennung. Eine Einführung in das Gebiet der künstlichen Intelligenz und insbesondere der künstlichen neuronalen Netzwerke gibt beispielsweise D. Kriesel, "A Brief Introduction to Neural Networks", http://www.dkriesel.com/en/science/neural_networks.

Eine Aufgabe der vorliegenden Erfindung ist es, die Bedienung einer Maschine zu vereinfachen.

Diese Aufgabe wird gelöst durch ein Verfahren zum Bedienen einer Maschine zur Verwendung in einer industriellen Produktionsumgebung mit folgenden Schritten:
- Bereitstellen einer Bedieneinrichtung zum Bedienen der Maschine und zum Beobachten von Maschinenzuständen, wobei die Bedieneinrichtung ein Mittel einer künstlichen Intelligenz umfasst oder mit einem Mitteln einer künstlichen Intelligenz verbindbar ist,
- Durchführen einer Vielzahl an Bedienhandlungen in Form jeweils einer Folge von Bedienschritten durch einen Bediener mittels der Bedieneinrichtung,
- Erfassen und Lernen der Bedienhandlungen durch das Mittel der künstlichen Intelligenz und,
- Durchführen einer weiteren Bedienhandlung in Form einer weiteren Folge von Bedienschritten durch den Bediener,
wobei wenigstens eine von der Bedieneinrichtung für den Bediener während der Durchführung der weiteren Bedienhandlung bereitgestellte Information von wenigstens einem Bedienschritt der weiteren Folge von Bedienschritten und dem Mittel der künstlichen Intelligenz abhängt.

Die Erfindung bietet den Vorteil, dass die Bedieneinrichtung dazu eingerichtet ist, an der Bedieneinrichtung vorgenommene Bedienhandlungen zu lernen. Hierfür umfasst die Bedieneinrichtung ein Mittel einer künstlichen Intelligenz oder sie ist mit einem Mitteln einer künstlichen Intelligenz verbindbar. Dabei kommen als Mittel der künstlichen Intelligenz z.B. Baysche Netze, künstliche neuronale Netze (KNN), insbesondere rekurrente neuronale Netze (RNN), oder "Long Short-Term Memories" (LSTM) in Betracht.

Während des Betriebs der Maschine kann somit jede einzelne Interaktion erfasst und klassifiziert werden. Mittels der künstlichen Intelligenz lassen sich die Zeitserien klassifizieren bzw. kann eine Vorhersage geliefert werden, welcher Bedienschritt - mit hoher Wahrscheinlichkeit - als nächstes folgen müsste. Damit lässt sich auch aus sehr "verrauschten", d.h. schwer zu klassifizierenden, Interaktionen auf die gewünschte Bedienhandlung schließen.

Ursachen für "verrauschte" Bedienhandlungen können sein:
- Die Reihenfolge der Bedienschritte ist teilweise unerheblich, sodass jeder Anwender eine individuelle Reihenfolge nutzt;
- Es werden teilweise Bedienschritte ausgeführt, die optional sind;
- Es überschneiden sich Bedienhandlungen;
- Es werden Bedienschritte ausgeführt, die nicht das Problem adressieren;
- Die Ausgangszustände und Endzustände sind nicht immer eindeutig, da der Maschinenzustand über eine Vielzahl von Parametern definiert wird;
- Eine Person kann mehrere Rollen einnehmen;
- Selbst wenn einer Person eine Rolle zugeordnet ist, kann sie nicht immer dieser Rolle gerecht werden, z.B. weil die Erfahrung fehlt.

Die Bedieneinrichtung passt sich über die Zeit dynamisch an die Anforderungen des aktuellen Bedieners an, indem die Maschine im Betrieb die Interaktionen und Zustandsdaten von Mensch und Maschine systematisch erfasst und auswertet.

Es geht insbesondere darum, eine Bedienhandlung und deren Kontext zu erkennen. Eine Bedienhandlung stellt dabei eine Folge von Bedienschritten (Sequenz von Interaktionen) durch einen Benutzer dar, welche die Maschine aus einem Ausgangszustand (z.B. Fehler 3456 steht an) in einen Endzustand (z.B. Maschine produziert wieder) überführt.

Wurde ein Interaktionsmuster, also eine bestimmte Bedienhandlung und damit ein bestimmtes Ziel erkannt, kann ein an diese Bedienhandlung angepasster Betrieb der Steuerung erfolgen. Insbesondere kann die Steuerung dem Bediener Informationen in Abhängigkeit der erkannten Bedienhandlung liefern.

Für das Lernen selbst gibt es eine Reihe an Möglichkeiten. Einerseits können das Lernen bzw. das Training der künstlichen Intelligenz im laufenden Betrieb der Maschine erfolgen. Hierzu werden zu bestimmten Bedienhandlungen eines oder mehrerer Benutzer gehörende Bedienschritte und zum Zeitpunkt der jeweiligen Bedienschritte vorliegende Maschinenzustände oder Werte von Parametern der Maschine erfasst und dem Mittel der künstlichen Intelligenz zugeführt.

Bei einer anderen Variante erfolgt das Training mittels eines digitalen Zwillings der Maschine. Diese Variante bietet den Vorteil, dass das Training unabhängig vom Betrieb einer realen Maschine erfolgen kann. Hierzu können in einer verhältnismäßig kurzen Zeit viele Szenarios durchgespielt werden, auch abseits der realen Maschine.

Eine weitere Variante der Erfindung sieht die Übernahme von Trainingsdaten oder Trainingsergebnissen vergleichbarer Maschinen vor. Diese Variante bietet den Vorteil, dass das erfindungsgemäße Verfahren auch bereits bei einer neu in Betrieb genommenen Maschine, zu der noch keine oder nur wenige Trainingsdaten vorliegen, verwendet werden kann.

Allen Varianten ist gemeinsam, dass die Maschine bzw. die künstliche Intelligenz lernt, welche Interaktionen die Maschine von einem ersten Zustand in einen anderen (zweiten) Zustand überführen.

Eine gut trainierte künstliche Intelligenz erkennt oft schon nach wenigen Bedienschritten, welche Bedienhandlung der Bediener (vermutlich) vornehmen möchte. Ist die beabsichtigte Bedienhandlung erst einmal erkannt, so können dem Bediener Informationen übermittelt werden, welche Bedienschritte sinnvollerweise als nächstes vorgenommen werden sollten.

Ein großer Vorteil der Verwendung einer künstlichen Intelligenz liegt darin begründet, dass nicht nur bereits durchgeführte Bedienhandlungen wiedererkannt (gelernt) und darauf aufbauend Bedienschritte vorgeschlagen werden, sondern dass die künstliche Intelligenz auch dann gute Vorschläge für weitere Bedienschritte einer Bedienhandlung liefern kann, wenn es sich um eine neue, bislang an der Maschine noch nicht durchgeführte Bedienhandlung handelt.

Das trainierte Mittel der künstlichen Intelligenz erkennt anhand von bereits durchgeführten weiteren Bedienschritten einer weiteren Bedienhandlung, um welche (weitere) Bedienhandlung es sich (vermutlich) handelt und welcher (weitere) Bedienschritt bzw. welche (weiteren) Bedienschritte sich vorteilhaft als nächstes anschließen sollten. Seitens der Bedieneinrichtung wird daher wenigstens eine Information bereitgestellt, die den Bediener darüber informiert, welchen Bedienschritt bzw. welche Bedienschritte er als nächstes - und in welcher Reihenfolge - an die bereits durchgeführten Bedienschritte anschließen sollte. Die so für den Bediener seitens der Bedieneinrichtung bereitgestellte Information ist daher von wenigstens einem Bedienschritt der weiteren Folge von Bedienschritten und dem (trainierten) Mittel der künstlichen Intelligenz abhängig.

Das Wort "weitere" (bzw. weiteren) soll darauf hinweisen, dass es sich bei der betreffenden Bedienhandlung bzw. der betreffenden Folge von Bedienschritten möglicherweise um eine Bedienhandlung bzw. um Bedienschritte handelt, die noch nicht "gelernt" wurden und somit "neu" für das Mittel der künstlichen Intelligenz sein können (aber nicht müssen). Hierin liegt gerade der Vorteil bei der Verwendung einer künstlichen Intelligenz, dass nicht alle Eventualitäten bekannt und entsprechend "programmiert" sein müssen.

In der Regel erkennt das Mittel der künstlichen Intelligenz bereits anhand weniger bereits ausgeführter Bedienschritte der weiteren Folge von Bedienschritten mit hoher Zuverlässigkeit, um welche weitere Bedienhandlung es sich handelt, also letztendlich, welches Ziel mit den bereits durchgeführten Bedienschritten verfolgt wird und welche "weiteren" Bedienschritte sich logischerweise an die bereits durchgeführten "weiteren" Bedienschritte anschließen. Auf das Wort "weitere" (bzw. weiteren) wird - ohne Einbußen bezüglich der Klarheit zu unterlaufen - in dieser Beschreibung gelegentlich auch verzichtet, wenn klar ist, dass es sich bei der betreffenden Bedienhandlung bzw. der Folge von Bedienschritten um die aktuelle, noch nicht abgeschlossene Bedienhandlung bzw. die aktuelle, noch nicht abgeschlossene Folge von Bedienschritten handelt und nicht um eine zurückliegende, zum Trainieren des Mittels der künstlichen Intelligenz verwendete Bedienhandlung.

Es wird weiterhin angemerkt, dass es sich bei der im Zusammenhang mit der Erfindung angezeigten "Information" in der Regel lediglich um eine Art Empfehlung handelt und der Bediener sich dieser Empfehlung nicht anschließen muss. Er kann also andere als die vorgeschlagenen Bedienschritte durchführen. Er kann in diesem Fall auch eine Information seitens der Bedieneinrichtung erhalten, dass ein von ihm durchgeführter Bedienschritt möglicherweise suboptimal ist.

Weiterhin ist die "Information" nicht auf die Anzeige des nächsten bzw. der nächsten auszuführenden Bedienschritte beschränkt. Beispielsweise können auch mehrere alternative Folgen angezeigt werden. Auch kann die Information an der Bedieneinrichtung einstellbare Parameter, aufrufbare Programme usw. betreffen. Die an den Bediener übermittelte Information kann daher sehr breit und vielschichtig sein.

Weiterhin lernt die Bedieneinrichtung im laufenden Betrieb der Maschine vorzugsweise ständig hinzu, das heißt, das Mittel der künstlichen Intelligenz wird laufend trainiert. So wird auch eine von einer vorgeschlagenen Folge von Bedienschritten abweichende Folge von Bedienschritten gelernt, insbesondere dann, wenn die damit verbundene Bedienhandlung insgesamt ein erkanntes Problem gelöst hat (z.B. Maschine läuft wieder nach einem Stopp aufgrund eines Problems).

Bei einer bevorzugten Ausführungsform der Erfindung wird ein Interaktionsmodell der Maschine bereitgestellt und das Mittel der künstlichen Intelligenz wird anhand des Interaktionsmodells trainiert. Dabei unterscheidet das Interaktionsmodell vorzugsweise zwischen den Eingängen in die Maschine (bzw. deren Steuerung) bzw. den Eingabemöglichkeiten eines Bedieners, den Ausgängen bzw. Ausgabemöglichkeiten der Maschine, insbesondere in Form möglicher Informationen für den Bediener, und den möglichen internen Zuständen der Maschine.

Das Interaktionsmodell wird vorzugsweise initial mit Engineering Daten der Maschine parametriert. Die Parametrierung kann entweder manuell erfolgen oder sie wird aus der Automatisierungskonfiguration automatisch abgeleitet. Die Maschine kann damit die einzelnen Werte kategorisieren und interpretieren.

Die folgenden Daten sind dabei von Interesse:
- HMI-Daten, z.B. Rolle des Bedieners, vorhandene Bildschirmmasken, vorhandene Eingabemöglichkeiten (Tastatur, Touchscreen, Mikrofon etc.), vorhandene Ausgabemöglichkeiten (Bildschirm, Lautsprecher);
- Zustandsdaten der Maschine, z.B. Betriebszustand, aktuelle Werte von Parametern, Sensorwerte;
- Eingabedaten, insbesondere Benutzereingaben;
- Ausgabedaten, z.B. an den Bediener übermittelbare Informationen, insbesondere Meldungen, Sollwerte für andere Maschinen, Produktionskennzahlen (Key-Performance-Indicator (KPI)).

Mittels des parametrierten Interaktionsmodells kann die Maschine später vor allem erstrebenswerte Zustände (z.B. Produziert unter voller Auslastung) von nicht erstrebenswerten Zuständen (z.B. Maschine steht mit einem Fehler) unterscheiden. Des Weiteren kennt die Maschine auch die gültigen Wertebereiche von Eingaben und kann so sofort auf unzulässige Eingaben hinweisen.

Bei einer Ausführungsform der Erfindung wird mittels des Interaktionsmodells und des Mittels der künstlichen Intelligenz im laufenden Betrieb der Maschine für eine bestimmte Bedienhandlung ein Startzustand (Ausgangszustand) der Maschine erkannt und ein Zielzustand (Endzustand) ermittelt. Nachfolgend ermittelt das Mittel der künstlichen Intelligenz eine Folge möglicher Bedienschritte, um von dem Ausgangszustand zu dem Endzustand zu gelangen. Dem Bediener können so Informationen bereitgestellt werden, die bei einer begonnenen und als solche erkannten Bedienhandlung mögliche und sinnvolle Bedienschritte aufzeigen, die sich an die bereits durchgeführten Bedienschritte anschließen.

Vorteilhaft umfassen die an den Bediener abgegebenen Informationen auch den aktuellen Status der Maschine, also den Ausgangszustand (z.B. Störung, Maschine steht) und das beabsichtigte Ziel der erkannten Bedienhandlung (Störung beseitigen, Betrieb der Maschine wieder aufnehmen) bzw. den Endzustand (Maschine läuft wieder). Der Bediener kann so überprüfen, ob sich das seitens der künstlichen Intelligenz ermittelte Ziel mit seinem tatsächlichen Ziel deckt.

Einerseits kann dem Bediener eine Liste mit mehreren bzw. allen Bedienschritten angezeigt werden, die noch erforderlich sind, um den Zielzustand zu erreichen. Es können aber auch nur jeweils der nächste Schritt oder einige wenige nächste Schritte angezeigt werden.

Bei einer Ausführungsform der Erfindung ist das Mittel der künstlichen Intelligenz als künstliches neuronales Netzwerk (KNN) ausgeführt oder es umfasst ein künstliches neuronales Netzwerk. Diese spezielle Ausführungsform künstlicher Intelligenz ist bereits sehr weit verbreitet, so dass weitgehend auf vorhandene künstliche neuronale Netzwerke (also im Wesentlichen auf bereits vorhandene Software) zurückgegriffen werden kann. Sie liefern nach einer kurzen Trainingszeit bereits gute Ergebnisse.

Eine Ausführungsform der Erfindung sieht vor, dass die von der Bedieneinrichtung für den Bediener bereitgestellte Information in Abhängigkeit von dem individuellen Bediener und insbesondere einer Funktion des individuellen Bedieners erfolgt. Dabei betrifft die Funktion die Rolle bzw. bestimmte Berechtigungen des Bedieners. Beispielsweise kann vorgesehen sein, dass ein bestimmter Bediener die Maschine lediglich überwachen, und somit ein von der Steuerung der Maschine ausgeführtes Programm nur starten oder stoppen darf. Ein anderer Bediener mit umfangreicheren Berechtigungen darf beispielsweise auch ein neues Programm laden. Die mittels der künstlichen Intelligenz bereitgestellten Informationen sind dabei vorzugsweise abhängig von der Rolle und den damit verbundenen Berechtigungen des Bedieners. Beispielsweise werden nur solche nachfolgenden Bedienschritte vorgeschlagen, die der individuelle Bediener auch ausführen darf.

Eine weitere Ausführungsform der Erfindung betrifft die Erzeugung von Bildschirmmasken der Bedieneinrichtung. Wenn bei einer Anzahl an Bedienhandlungen, bei denen stets mehrere bestimmte, insbesondere die Funktion der Maschine betreffende, Parameter, die über verschiedene Bildschirmmasken der Bedieneinrichtung verteil sind, gemeinsam geändert werden, wird automatisch eine eigene Bildschirmmaske mit diesen Parametern generiert und dem Bediener bei einer bestimmten weiteren Bedienhandlung angeboten. Die Maschine lernt somit, dass bestimmte Parameter häufig in einem Zusammenhang stehen und somit oft gemeinsam geändert werden. Mittels der künstlichen Intelligenz wird so eine neue Bildschirmmaske generiert, auf der ebendiese Parameter gemeinsam zu finden sind. Diese Vorgehensweise erleichtert die Anpassung der Maschine an häufig wiederkehrende, vergleichbare Situationen.

Bei einer weiteren Ausführungsform der Erfindung wird bei einer Bedienhandlung erkannt, ob Werte von eingegebenen Parametern von üblichen Werten dieser Parameter abweichen, wobei der Bediener vorteilhaft eine die Abweichung betreffende Information erhält.

Der Bediener wird so darauf hingewiesen, dass ein von ihm ausgeführter Bedienschritt (Zuweisung eines Wertes außerhalb eines bestimmten Wertebereiches zu einem Parameter) nicht mit dem erwarteten Bedienschritt (Zuweisung des Wertes innerhalb des bestimmten Wertebereiches) übereinstimmt.

Eine im Zusammenhang mit der Bedienung einer Maschine sehr häufig anzutreffende Situation betrifft die Beseitigung einer erkannten Störung. Daher sieht eine Ausführungsform der Erfindung vor, dass bei einer an der Maschine vorliegenden und erkannten Störung mittels der Bedieneinrichtung eine Bedienhandlung vorgeschlagen wird, die bei einer mit der Störung zumindest teileweise übereinstimmenden Störung in der Vergangenheit bereits zu einer Beseitigung der Störung geführt hat.

Eine andere Ausführungsform der Erfindung sieht vor, dass mittels des Mittels der künstlichen Intelligenz auf Basis der Folge von Bedienschritten eine bestimmte Bedienhandlung erkannt wird und eine Information an den Bediener abgegeben wird, wenn wenigstens ein von der Bedienhandlung normalerweise umfasster Bedienschritt nicht oder nicht in der erwarteten Reihenfolge bezüglich anderer Bedienschritte ausgeführt wurde.

Diese Information dient dem Bediener beispielsweise zur Kontrolle, ob ein "fehlender" Bedienschritt bewusst nicht ausgeführt oder vergessen wurde.

Eine Ausführungsform der Erfindung sieht vor, dass die Bedieneinrichtung das Mittel der künstlichen Intelligenz umfasst.

Diese Ausführungsform hat den Vorteil, dass zur Anwendung des Mittels der künstlichen Intelligenz kein Zugriff auf eine externe Recheneinrichtung und damit auch keine Übertragung von Daten über ein Netzwerk erforderlich ist.

Eine andere Ausführungsform der Erfindung sieht vor, dass das Mittel der künstlichen Intelligenz auf einer externen, mit der Bedieneinrichtung verbindbaren Recheneinrichtung vorhanden ist.

Diese Ausführungsform hat den Vorteil, dass das Mittel der künstlichen Intelligenz keine Rechenkapazität auf der Steuerung bindet. Durch den Zugriff auf eine externe Recheneinrichtung steht eine nahezu unbegrenzte Rechenleistung zur Verfügung. Gegebenenfalls kann auch auf eine viel umfangreichere Datenbasis zurückgegriffen werden.

Die eingangs gestellte Aufgabe wird ferner gelöst durch eine Bedieneinrichtung für eine Steuerung, insbesondere eine numerische Steuerung, einer Maschine zur Durchführung eines Verfahrens nach einem der Ansprüche 1 bis 12.

Die eingangs gestellte Aufgabe wird ferner gelöst durch eine Steuerung, insbesondere eine numerische Steuerung, mit einer Bedieneinrichtung nach Anspruch 13.

Die eingangs gestellte Aufgabe wird ferner gelöst durch eine Werkzeugmaschine mit einer numerischen Steuerung nach Anspruch 14.

Die Erfindung wird nachfolgend anhand von Ausführungsbespielen näher erläutert. Dabei zeigen:
- FIG 1: Eine Werkzeugmaschine zur Durchführung eines erfindungsgemäßen Verfahrens,
- FIG 2: ein künstliches neuronales Netzwerk,
- FIG 3: die Überführung einer Maschine von einem Ausgangszustand in einen Endzustand,
- FIG 4: eine exemplarische Bedienhandlung eines ersten Bedieners,
- FIG 5: eine exemplarische Bedienhandlung eines zweiten Bedieners,
- FIG 6: Verfahrensschritte bei der Durchführung eines erfindungsgemäßen Verfahrens in Form eines Ablaufdiagramms.

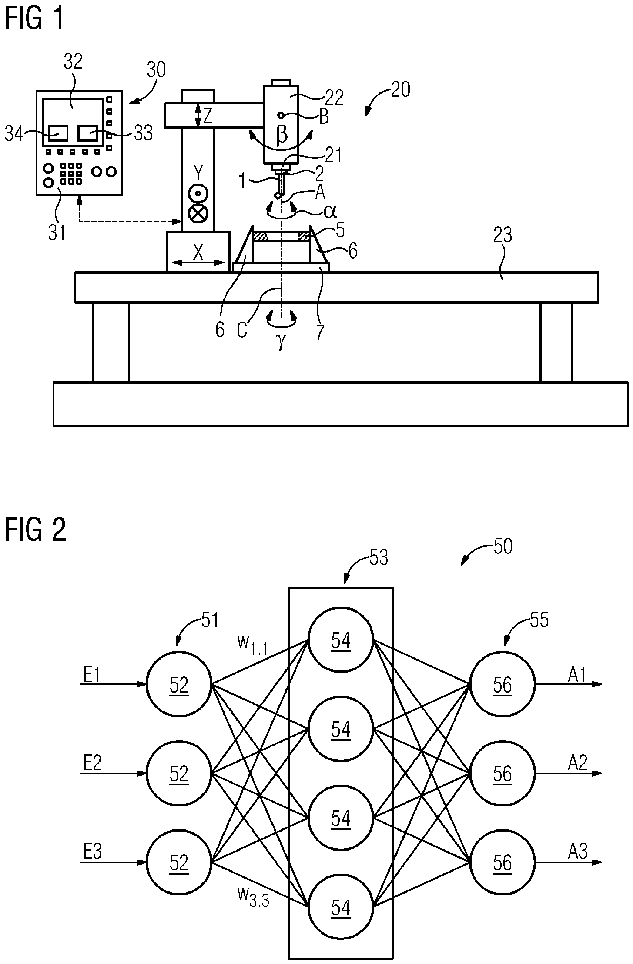

In FIG 1 ist schematisiert eine Werkzeugmaschine 20 dargestellt. Die Werkzeugmaschine 20 verfügt im Rahmen des Ausführungsbeispiels über sechs Maschinenachsen, durch die eine Relativbewegung zwischen einem Werkzeug 1, das im Rahmen des Ausführungsbeispiels in Form eines Drehmeißels 1 vorliegt, und einem Werkstück 5, z.B. einem Ventilsitz, ausgeführt werden kann. Das Werkzeug 1 ist dabei in einen Werkzeughalter 2 eingespannt, der mit einer Werkzeugspindel 21 verbunden ist, die von einem lagegeregelten Motor 22 angetrieben wird. Das Werkstück 5 ist durch Spannmittel 6 an einem Werkstücktisch 7 befestigt.

Der Drehmeißel 1 lässt sich mit der im Ausführungsbeispiel gezeigten Maschine 20 mit der Übersichtlichkeit halber in FIG 1 nicht dargestellten Antrieben in X-, Y- und Z-Richtung lagegeregelt translatorisch bewegen. Neben den drei Linearachsen umfasst die gezeigte Werkzeugmaschine 20 ferner die beiden, ebenfalls aus FIG 1 ersichtlichen lagegeregelten Rundachsen A und B, mit denen das Werkzeug 1 um die jeweilige Achse gedreht und ebenfalls lagegeregelt durch die Winkellagen α und β relativ zu dem Werkstück 5 ausgerichtet werden kann.

Darüber hinaus verfügt die Maschine 20 über eine dritte lagegeregelte Rundachse C, die parallel zur Z-Achse verläuft und bezüglich der der Werkstücktisch 7 relativ zu einem ruhenden Maschinengestell 23 drehbar gelagert ist. Dadurch kann das Werkstück 5 auch in einer Winkellage γ relativ zu dem Werkzeug 1 positioniert werden. Auch hier wurde der Übersichtlichkeit halber auf eine Darstellung des Antriebs verzichtet.

Abhängig von der durchzuführenden Bearbeitung ist bei der gezeigten Werkzeugmaschine 20 auch ein drehzahlgeregelter Betrieb bezüglich der Rundachsen A und/oder C möglich.

Die Werkzeugmaschine 20 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 20.

Es sei an dieser Stelle angemerkt, dass die Werkzeugmaschine 20 selbstverständlich auch noch mehr, aber auch weniger als sechs Maschinenachsen aufweisen kann.

Die Werkzeugmaschine 20 ist mit einer numerischen Steuerung 30 verbunden, die anhand eines Teileprogramms 33 und/oder einer Handbedieneingabe Lagesollwerte x, y, z, α, β und γ zur Steuerung einer zwischen dem Werkzeug 1 und dem Werkstück 5 stattfindenden Relativbewegung ermittelt. Die numerische Steuerung 30 ermittelt die Lagesollwerte anhand des Teileprogramms 33, in dem die von dem Werkzeug 1 relativ zu dem Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der numerischen Steuerung 30 von einem Bediener vor Ort an der Werkzeugmaschine 20 vorgegeben werden. Die Bedieneinrichtung 31 weist hierzu insbesondere Eingabefelder, Tasten und Drehregler auf.

Das Teileprogramm 33 wird dabei üblicherweise von einem externen CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms 33 erzeugt die numerische Steuerung 30 in einem bestimmten Takt, dem Interpolationstakt, sowohl Lagesollwerte x, y und z für die Linearachsen als auch α, β und γ (Winkellagen) für die Rundachsen. Durch diese Lagesollwerte wird das Werkzeug 1 mit vorgegebener Orientierung relativ zu dem Werkstück 5 entlang einer Bewegungsbahn bewegt.

Gemäß der Erfindung ist die numerische Steuerung 30 gemäß FIG 1 mit einem Mittel einer künstlichen Intelligenz in Form eines künstlichen neuronalen Netzwerks (KNN) ausgestattet. Alternativ könnte sie auch über ein Netzwerk mit einer externen Recheneinrichtung (nicht dargestellt) verbindbar sein, auf der sich das KNN befindet.

Das KNN erfasst im regulären Betrieb der Maschine Eingabedaten des Benutzers sowie Zustandsdaten der Maschine (aktuelle Werte von Parametern, Sensor-Werte etc.) und liefert an seinem Ausgang Ausgabedaten. Die Ausgabedaten enthalten Informationen für den Bediener bezüglich der als nächstes anstehenden Bedienschritte, insbesondere vorzunehmender Parameter-Einstellungen oder Programm-Aufrufe. Dem Bediener werden diese Informationen auf einer Bildschirmmaske 34 der Steuerung 30 angezeigt.

Eine mögliche Topologie eines derartigen KNN 50 zeigt FIG 2. Das KNN 50 umfasst eine Eingabeschicht 51 mit Eingabe-Neuronen (Input-Neuronen) 52. Über die Eingabe-Neuronen werden die Eingaben des Bedieners in die Steuerung erfasst. Weiterhin können auch bestimmte Maschinen-Zustände, die sich insbesondere in den Werten von Parametern widerspiegeln, mittels der Eingabe-Neuronen erfasst werden. Weiterhin können auch Sensor-Signale bzw. -Daten als Eingaben dienen. Exemplarisch sind in FIG 2 die drei Eingaben E1, E2 und E3 dargestellt.

Das Netzdesign der verdeckten Zwischenschicht 53, auch als verdeckte Neuronenschicht bzw. engl. "hidden layer" bezeichnet, mit den Zwischenschicht-Neuronen 54 kann nun völlig unterschiedlich aussehen. Eine mögliche Ausprägung eines solchen hidden layer 53 wäre die Repräsentation möglicher Bedienschritte eines Bedieners durch die Neuronen 54 des hidden layer. Es sind auch weitere hidden layer (nicht dargestellt) möglich, die z.B. bestimmte Bedienhandlungen oder auch Korrelationen zwischen unterschiedlichen Bedienhandlungen repräsentieren.

Die Eingabe-Neuronen 52 gehen mit unterschiedlichen Gewichtungen wᵢⱼ auf die verdeckte Neuronenschicht 53 ein. Ein wesentlicher Aspekt beim Trainieren des neuronalen Netzes 50 ist die Bestimmung dieser Gewichtungen wᵢⱼ.

Die in der Ausgabeschicht 55 vorhandenen Ausgabe-Neuronen 56 repräsentieren mögliche Bedienschritte, die im Zusammenhang mit einer anhand bereits durchgeführter Bedienschritte erkannten Bedienhandlung sinnvoll im Anschluss an die bereits erfolgten Bedienschritte ausgeführt werden können. Ein aktiviertes Ausgabe-Neuron 56 zeigt beispielsweise an, dass der damit zusammenhängende Bedienschritt mit hoher Wahrscheinlichkeit als nächster Bedienschritt des Bedieners zu erwarten ist. Ist das betreffende Neuron 56 nicht aktiviert, so ist es wenig wahrscheinlich, dass der damit zusammenhängende Bedienschritt als nächstes ausgeführt wird. Exemplarisch sind auch hier in FIG 2 drei Ausgaben A1, A2 und A3 dargestellt, die jeweils die Wahrscheinlichkeit für einen bestimmten Bedienschritt angeben, mit der dieser Bedienschritt als nächstes ausgeführt wird.

Auch für die Ausgabeschicht 55 des Netzes sind, je nach Anforderung, unterschiedliche Designs möglich.

Auch die Verwendung mehrerer sichtbarer Ausgabeschichten 55 ist möglich, so dass neben der Information, welcher Bedienschritt als nächstes zu erwarten ist, beispielsweise eine Wertzuweisung für einen bestimmten Parameter durch den Bediener, zusätzlich ersichtlich ist, in welchem Wertebereich die Eingabe erwartet wird.

Das Training ("Deep Learning"-Prozess) des Netzes 50 selbst geschieht beispielsweise mit Hilfe von Testdaten, die beispielsweise in nahezu beliebiger Menge und Genauigkeit mit Hilfe eines digitalen Zwillings der Maschine erzeugt werden können. Das Training selbst kann so auch als ausgelagerter Prozess abseits der realen Maschine durchgeführt werden.

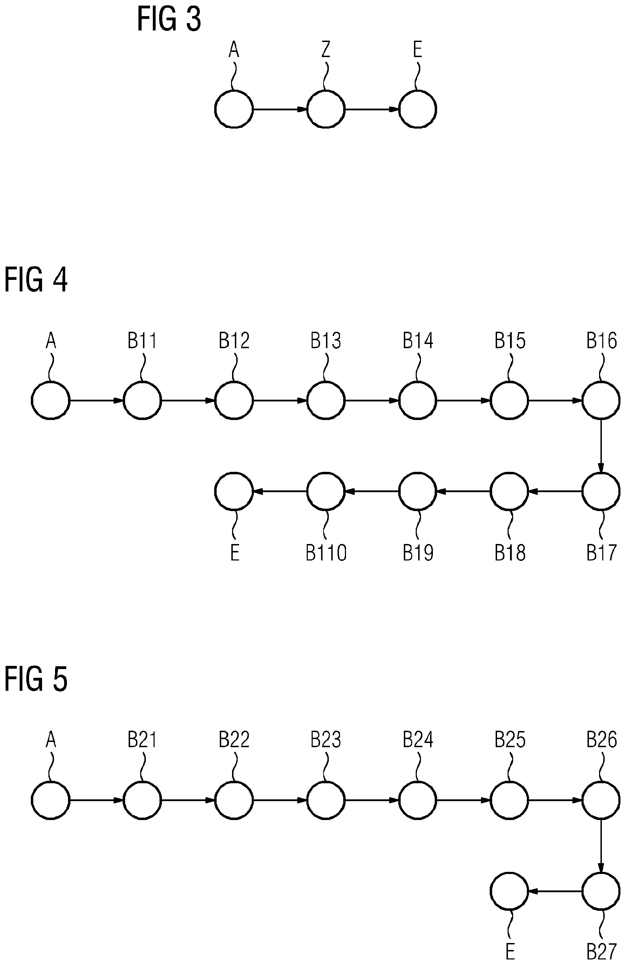

FIG 3 veranschaulicht allgemein die Überführung einer Maschine von einem Anfangs- bzw. Ausgangszustand A über einen Zwischenzustand Z in einen Endzustand E. Der Ausgangszustand A ist in der Regel der aktuelle Zustand der Maschine, der verändert werden soll. Der Endzustand E kann sich logischerweise aus dem aktuellen Ausgangszustand ergeben, zum Beispiel wenn der aktuelle Ausgangszustand lautet: "Fehler an der Maschine, Maschine steht". Ein erstrebenswerter Endzustand E für diese Situation wäre: "Maschine produziert wieder". Der angestrebte Endzustand E kann jedoch auch durch das neuronale Netzwerk ermittelt werden, zum Beispiel wenn anhand der ersten Bedienschritte einer Bedienhandlung das neuronale Netzwerk die beabsichtigte Bedienhandlung erkennt.

FIG 4 veranschaulicht eine exemplarische Bedienhandlung eines ersten Bedieners zur Beseitigung eines Werkzeugbruchs bei einer Werkzeugmaschine:
Der Ausgangszustand A lautet somit: Werkzeugbruch liegt vor, Maschine steht. In einem ersten Bedienschritt B11 werden alle Achspositionen der Maschine zum Zeitpunkt des erkannten Werkzeugbruchs zwischengespeichert und in einem zweiten Bedienschritt B12 das Teileprogramm unterbrochen und somit alle Achsen der Maschine gestoppt. In einem dritten Bedienschritt B13 wird das gebrochene Werkzeug in eine vorgegebene Werkzeugwechselposition verfahren. In einem vierten Bedienschritt B14 wird eine Verriegelung einer Schutzverhaubung der Maschine gelöst. In einem fünften Bedienschritt B15 wird die Schutzverhaubung manuell geöffnet und in einem sechsten Bedienschritt B16 das gebrochene Werkzeug manuell durch ein neues ersetzt. In einem siebten Bedienschritt B17 wird die Schutzverhaubung wieder manuell geschlossen und in einem achten Bedienschritt B18 verriegelt. In einem neunten Bedienschritt B19 wird die gespeicherte Position des Werkzeugs zum Zeitpunkt des Werkzeugbruchs angefahren und in einem zehnten Bedienschritt B110 die Unterbrechung des Teileprogramms aufgehoben. Die Störung ist damit behoben und die Maschine setzt ihren regulären Betrieb fort, was dem angestrebten Endzustand E der Bedienhandlung entspricht.

FIG 5 veranschaulicht eine exemplarische Bedienhandlung eines zweiten Bedieners zur Beseitigung eines Werkzeugbruchs bei einer Werkzeugmaschine:
Auch hier lautet der Ausgangszustand A: "Werkzeugbruch liegt vor, Maschine steht" und der angestrebte Endzustand: "Störung behoben, Maschine produziert wieder".

In einem ersten Bedienschritt B21 werden alle Achspositionen der Maschine zum Zeitpunkt des erkannten Werkzeugbruchs zwischengespeichert und in einem zweiten Bedienschritt B22 das Teileprogramm unterbrochen und somit alle Achsen der Maschine gestoppt. In einem dritten Bedienschritt B23 wird das gebrochene Werkzeug in eine vorgegebene Werkzeugwechselposition verfahren. In einem vierten Bedienschritt B24 wird mittels eines in der Maschine befindlichen Werkzeugrevolvers ein neues Werkzeug ebenfalls in eine Werkzeugwechselposition gebracht. In einem fünften Bedienschritt B25 wird das gebrochene Werkzeug automatisch mittels eines Werkzeugwechslers durch das neue Werkzeug ersetzt. In einem sechsten Bedienschritt B26 wird die gespeicherte Position des Werkzeugs zum Zeitpunkt des Werkzeugbruchs angefahren und in einem siebten Bedienschritt B27 die Unterbrechung des Teileprogramms aufgehoben. Die Störung ist damit behoben und die Maschine setzt ihren regulären Betrieb fort.

Die zuletzt beschriebene Variante kann nur dann ausgeführt werden, wenn bei der betreffenden Maschine ein Werkzeugrevolver mit Ersatzwerkzeugen und ein automatischer Werkzeugwechsler vorhanden sind.

Gemäß der Erfindung können beide Varianten durch das künstliche neuronale Netzwerk gelernt werden. In dem künstlichen neuronalen Netzwerk ist weiterhin die Information vorhanden, ob die betreffende Werkzeugmaschine einen automatischen Werkzeugwechsler umfasst und ob sich ein passendes Ersatzwerkzeug in dem Werkzeugmagazin befindet. Abhängig von der jeweiligen Situation an der Maschine kann das trainierte künstliche neuronale Netzwerk dem Bediener bei einem erneuten Werkzeugbruch an einer Anzeigevorrichtung der Steuerung anzeigen, welche Bedienschritte er bei einem erkannten Werkzeugbruch als nächstes ausführen sollte.

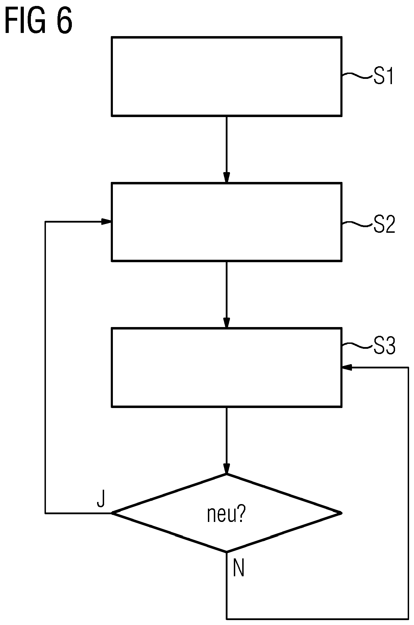

Nachfolgend werden die wesentlichen Verfahrensschritte bei der Durchführung eines erfindungsgemäßen Verfahrens nochmals in Form eines Ablaufdiagramms gemäß FIG 6 verdeutlicht.

In einem ersten Verfahrensschritt S1 wird eine Bedieneinrichtung zum Bedienen der Maschine und zum Beobachten von Maschinenzuständen bereitgestellt, wobei die Bedieneinrichtung ein Mittel einer künstlichen Intelligenz, beispielsweise ein künstliches neuronales Netzwerk, umfasst oder mit einem Mittel einer künstlichen Intelligenz verbindbar ist.

In einem Verfahrensschritt S2 wird eine Vielzahl an Bedienhandlungen in Form jeweils einer Folge von Bedienschritten durch einen Bediener mittels der Bedieneinrichtung durchgeführt. Die Bedienhandlungen können im laufenden Betrieb der Maschine erfasst werden, es können aber auch spezielle Bedienhandlungen eigens zum Trainieren der künstlichen Intelligenz durchgeführt werden, insbesondere auch abseits der realen Maschine und in Verbindung mit einem digitalen Zwilling der Maschine.

In einem Verfahrensschritt S2 werden die Bedienhandlungen durch das Mittel der künstlichen Intelligenz erfasst und gelernt. Die künstliche Intelligenz "kennt" mehrere mögliche Bediener und insbesondere auch die Rolle bzw. Befugnisse des individuellen Bedieners und lernt dessen Eingaben in Abhängigkeit dieser Rolle, des jeweiligen Zustandes der Maschine, das heißt der aktuellen Parameter- und Sensor-Werte zum Zeitpunkt der betreffenden Eingabe, und der Folge der im Zusammenhang mit der Bedienhandlung bereits vorgenommenen Bedienschritte.

In einem Verfahrensschritt S3 wird eine weitere Bedienhandlung in Form einer weiteren Folge von Bedienschritten durch den Bediener durchgeführt. Dabei hängt wenigstens eine von der Bedieneinrichtung für den Bediener während der Durchführung der weiteren Bedienhandlung bereitgestellte Information von wenigstens einem Bedienschritt der weiteren Folge von Bedienschritten und dem Mittel der künstlichen Intelligenz ab. Das heißt insbesondere, das trainierte Mittel der künstlichen Intelligenz erkennt anhand (einiger weniger) Bedienschritte eine beabsichtigte Bedienhandlung des Benutzers und gibt in Form einer Information an den Bediener eine Art Empfehlung ab, welcher Bedienschritt bzw. welche Bedienschritte sich - insbesondere auch in welcher Reihenfolge - an die bereits vorgenommenen Bedienschritte anschließen sollten.

Handelt es sich bei der weiteren Bedienhandlung insbesondere um eine neue, an der Maschine bislang noch nicht durchgeführte Bedienhandlung, so erfolgt ein Übergang zu Verfahrensschritt S2 und die neue Bedienhandlung wird gelernt, insbesondere dann, wenn durch die Bedienhandlung ein vorbekannter, erstrebenswerter Endzustand erreicht wurde. Andernfalls erfolgt ein Rücksprung zu Verfahrensschritt S3, bei dem die nächste weitere Bedienhandlung durchgeführt wird.

## Patentansprüche

1. Verfahren zum Bedienen einer Maschine (20) zur Verwendung in einer industriellen Produktionsumgebung mit folgenden Schritten:
- Bereitstellen einer Bedieneinrichtung (31) zum Bedienen der Maschine (20) und zum Beobachten von Maschinenzuständen, wobei die Bedieneinrichtung (31) ein Mittel einer künstlichen Intelligenz umfasst oder mit einem Mitteln einer künstlichen Intelligenz verbindbar ist,
- Durchführen einer Vielzahl an Bedienhandlungen in Form jeweils einer Folge von Bedienschritten durch einen Bediener mittels der Bedieneinrichtung (31),
- Erfassen und Lernen der Bedienhandlungen durch das Mittel der künstlichen Intelligenz und
- Durchführen einer weiteren Bedienhandlung in Form einer weiteren Folge von Bedienschritten (B11 - B110; B21 - B27) durch den Bediener,
wobei wenigstens eine von der Bedieneinrichtung (31) für den Bediener während der Durchführung der weiteren Bedienhandlung bereitgestellte Information (34) von wenigstens einem Bedienschritt der weiteren Folge von Bedienschritten und dem Mittel der künstlichen Intelligenz abhängt.

2. Verfahren nach Anspruch 1, wobei ein Interaktionsmodell der Maschine (20) bereitgestellt wird und das Mittel der künstlichen Intelligenz anhand des Interaktionsmodells trainiert wird.

3. Verfahren nach Anspruch 2, wobei mittels des Interaktionsmodells und des Mittels der künstlichen Intelligenz im laufenden Betrieb der Maschine ein Ausgangszustand (A) der Maschine (20) erkannt wird und ein Endzustand (E) ermittelt wird und eine Folge möglicher Bedienschritte ermittelt wird, um von dem Ausgangszustand (A) zu dem Endzustand (E) zu gelangen, und wobei die für den Bediener bereitgestellte Information (34) die Folge möglicher Bedienschritte betrifft.

4. Verfahren nach einem der vorherigen Ansprüche, wobei das Mittel einer künstlichen Intelligenz als künstliches neuronales Netzwerk (50) ausgebildet ist oder ein künstliches neuronales Netzwerk (50) umfasst.

5. Verfahren nach einem der vorherigen Ansprüche, wobei die von der Bedieneinrichtung (31) für den Bediener bereitgestellte Information (34) in Abhängigkeit von dem individuellen Bediener und insbesondere einer Funktion und/oder einer Berechtigung des individuellen Bedieners erfolgt.

6. Verfahren nach einem der vorherigen Ansprüche, wobei dann wenn bei einer Anzahl an Bedienhandlungen, bei denen mehrere bestimmte, insbesondere die Funktion der Maschine betreffende, Parameter, die über verschiedene Bildschirmmasken der Bedieneinrichtung (31) verteil sind, diese Parameter stets gemeinsam geändert werden, automatisch eine eigene Bildschirmmaske (34) mit diesen Parametern generiert und dem Bediener bei einer bestimmten weiteren Bedienhandlung angeboten wird.

7. Verfahren nach einem der vorherigen Ansprüche, wobei bei einer weiteren Bedienhandlung erkannt wird, ob Werte von eingegebenen Parametern von üblichen Werten dieser Parameter abweichen und wobei der Bediener eine die Abweichung betreffende Information (34) erhält.

8. Verfahren nach einem der vorherigen Ansprüche, wobei bei einer an der Maschine vorliegenden und erkannten Störung mittels der Bedieneinrichtung (31) eine Bedienhandlung in Form bestimmter Bedienschritte vorgeschlagen wird, die bei einer mit der Störung zumindest teileweise übereinstimmenden Störung zuvor bereits zu einer Beseitigung der Störung geführt hat.

9. Verfahren nach einem der vorherigen Ansprüche, wobei mittels des Mittels der künstlichen Intelligenz auf Basis der Folge von Bedienschritten eine bestimmte Bedienhandlung erkannt wird und eine Information (34) an den Bediener abgegeben wird, wenn wenigstens ein von der Bedienhandlung normalerweise umfasster Bedienschritt nicht ausgeführt wurde.

10. Verfahren nach einem der vorherigen Ansprüche, wobei die Bedieneinrichtung (31) oder die Steuerung (30) der Maschine (20) das Mittel der künstlichen Intelligenz umfasst.

11. Verfahren nach einem der vorherigen Ansprüche, wobei das Mittel der künstlichen Intelligenz auf einer externen, mit der Bedieneinrichtung (31) oder der Steuerung (30) der Maschine verbindbaren Recheneinrichtung vorhanden ist.

12. Verfahren nach einem der vorherigen Ansprüche, wobei ein digitaler Zwilling der Maschine (20) vorhanden ist und das Mittel der künstlichen Intelligenz anhand des digitalen Zwillings trainiert wird.

13. Bedieneinrichtung (30) für eine Steuerung, insbesondere eine numerische Steuerung (30), einer Maschine zur Durchführung eines Verfahrens nach einem der Ansprüche 1 bis 12.

14. Steuerung, insbesondere numerische Steuerung (30), mit einer Bedieneinrichtung nach Anspruch 13.

15. Werkzeugmaschine (20) mit einer numerischen Steuerung (30) nach Anspruch 14.
